(19) Europäisches Patentamt

European Patent Office

Office européen des brevets

(11) **EP 4 040 658 B1**

(12) **EUROPEAN PATENT SPECIFICATION**

(45) Date of publication and mention
of the grant of the patent:
**06.03.2024 Bulletin 2024/10**

(21) Application number: **22152905.0**

(22) Date of filing: **24.01.2022**

(51) International Patent Classification (IPC):
*H02M 1/00* (2006.01)    *H02M 3/00* (2006.01)
*H02M 3/158* (2006.01)    *H02M 3/07* (2006.01)

(52) Cooperative Patent Classification (CPC):
**H02M 3/01; H02M 1/0095; H02M 3/07;**
**H02M 3/158;** Y02B 70/10

(54) **NON-ISOLATED HYBRID RESONANCE CIRCUIT**

NICHT-ISOLIERTER HYBRIDRESONANZKREIS

CIRCUIT DE RÉSONANCE HYBRIDE NON ISOLÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.02.2021 CN 202110181728**

(43) Date of publication of application:
**10.08.2022 Bulletin 2022/32**

(60) Divisional application:
**23213408.0 / 4 307 545**
**23213409.8 / 4 307 546**

(73) Proprietor: **Delta Electronics (Shanghai) Co., Ltd.**
**Shanghai 201209 (CN)**

(72) Inventors:
• **YE, Yiqing**
  **Shanghai, 201209 (CN)**
• **ZHOU, Yuan**
  **Shanghai, 201209 (CN)**
• **BAO, Huayao**
  **Shanghai, 201209 (CN)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-A1- 2019 229 613**

• **SAGGINI STEFANO ET AL: "A 99% Efficient**
**Dual-Phase Resonant Switched-Capacitor-Buck**
**Converter for 48 V Data Center Bus Conversions",**
**2019 IEEE APPLIED POWER ELECTRONICS**
**CONFERENCE AND EXPOSITION (APEC), IEEE,**
**17 March 2019 (2019-03-17), pages 482-487,**
**XP033555977, DOI: 10.1109/APEC.2019.8721860**
**[retrieved on 2019-05-24]**
• **DAOCHENG HUANG ET AL: "Novel non-isolated**
**LLC resonant converters", APPLIED POWER**
**ELECTRONICS CONFERENCE AND EXPOSITION**
**(APEC), 2012 TWENTY-SEVENTH ANNUAL IEEE,**
**IEEE, 5 February 2012 (2012-02-05), pages**
**1373-1380, XP032127848, DOI:**
**10.1109/APEC.2012.6165999 ISBN:**
**978-1-4577-1215-9**
• **GONG MINXIANG ET AL: "Non-isolated 48V-to-1V**
**Heterogeneous Integrated Voltage Converters**
**for High Performance Computing in Data**
**Centers", 2020 IEEE 63RD INTERNATIONAL**
**MIDWEST SYMPOSIUM ON CIRCUITS AND**
**SYSTEMS (MWSCAS), IEEE, 9 August 2020**
**(2020-08-09), pages 411-414, XP033819036, DOI:**
**10.1109/MWSCAS48704.2020.9184442 [retrieved**
**on 2020-09-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The disclosure relates to a conversion circuit for converting a voltage of a power supply and powering a load by the converted voltage, and particularly to a non-isolated hybrid resonance circuit.

**BACKGROUND**

Research data of the Chinese Data Center Technology Committee shows that a total power consumption of the Chinese Data Center in 2016 exceeds 120 billion Kw/h. With more services supported by the data center, computing load and scale of the data center will continuously keep a high growth. In order to enhance a computing density of the data center, power of the single rack is also increased. In the traditional rack, an AC-UPS for powering the rack is located outside the rack, and a DC distribution bus voltage inside is 12V, and is relatively stable. However, when the power of the single rack exceeds 15kW, a current through 12V DC distribution bus is significantly increased, thereby largely reducing efficiency, and increasing heat dissipation cost, and cost of cables and connectors. Therefore, in the novel electric power transmission architecture, the DC distribution bus voltage inside the rack is increased to 48V, and meanwhile, the AC-UPS is replaced with a DC-UPS mounted inside the rack, and directly connected to 48V DC distribution bus. This significantly reduces a disribution bus current, improves power efficiency of the data center, and reduces cost of electricity, heat dissipation cost and distribution bus cost, thereby reducing a total cost of ownership of the data center.

It can be seen that in the novel electric power transmission architecture, a voltage conversion ratio between a bus and a processor chip is significantly incresed, and a voltage regulation module (VRM) between the DC bus and the processor chip has an extremely high requirement for efficiency. In such conditions, the 48V VRM converting power from the DC distribution bus to the processor chip faces a huge challenge when the requiremnent for both of a high power density and a high power conversion efficiency needs to be satisfied.

Generally, the 48V VRM is a two-level cascaded conversion structure. In this structure, an input voltage is first reduced, and then regulated. For example, the first level converter uses an efficient DC transformer to converter an 48V bus voltage (Uin) to a low intermediate bus voltage (Uib), such as, 4V. The second level converter uses a multi-phase interleaved BUCK converter, and the BUCK is controlled to output a voltage Uo with a closed loop, thereby ensuring power supply for the load (e.g., the processor chip).

An LLC series resonance circuit is often used for the first level converter of the 48V VRM. However, the LLC circuit has some defects. All energy conversion must be through the transformer. Switches at the primary side of the transformer are responsible for producing excitation current through a primary winding. A secondary winding induces excitation current through the primary winding. Then the power is outputted to a final load through a rectifier. During this process, the switches at the primary side of the transformer only produce an excitation current, and the excitation current itself does not flow to a load, but return to an input. As a result, all load current is supplied by a secondary circuit, so current stresses of the secondary winding and the rectifier are relatively large. In conclusion, the LLC circuit can realize a high voltage conversion ratio, while realizing ZVS(zero voltage switching). However, as all energy of the LLC cicuit is delivered through the transformer, the effiency can not be very high. And in the full-wave rectifier circuit, only one winding works in each half period, such that another winding is idle.

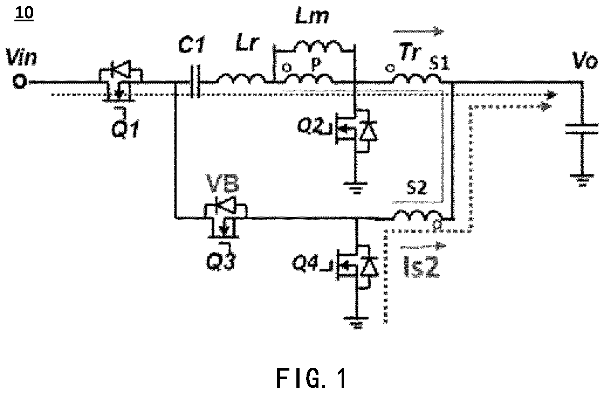

When isolation is unnecessary in the system, a non-isolated LLC circuit 10 shown in FIG. 1 also can be used. In FIG. 1, a turn ratio of windings P, S1 and S2 of a tranformer is N: 1:1, a switching frequency fs is equal to a resonant frequency fr, and a magnetic inductance on the transformer is Lm. As shown in FIG. 1, when the non-isolated LLC circuit works, in a positive half period, switches Q1 and Q4 are turned on, and switches Q2 and Q3 are turned off. Here, an inductor Lr and a capacitor C1 resonate, and the resonant frequency is $fr = 1/\left(2\pi \times \sqrt{Lr \times C1}\right)$, while an excitation current $I_{Lm}$ rises linearly. At this time, a resonant current $I_{Lr}$ passes through the primary winding P, and then is injected into one end Vo of a load after passing through the secondary winding S1. Therefore, a primary current of the transformer of the circuit flows to a load, instead of directly returning to one end Vin of a power supply. As compared to the LLC, it is unnecessary for the transformer to induce all load current, so an induced current of the transformer is decreased, while a current flowing the switches is also decreased, causing reduction of loss. Meanwhile, the secondary winding S2 induces excitation from the primary winding P and the secondary winding S1, and induces (N+1) times of current. During this process, the secondary winding S1 also functions as an excitation winding, and in the case of the same excitation ratio of the transformer, the number of turns of the primary winding P can be reduced, thereby reducing an on resistance and an on loss of the primary winding P. A soft switching process is after the positive half period, and during this process, the excitation current charges parasitic capacitance of the switches Q1 and Q4, and parasitic capacitance of the switches Q2 and Q3 is discharged, thereby realizing soft switching. Then, during a negative half period, the switches Q2 and Q3 are turned on, and the switches Q1 and Q4 are turned off. This process is substantial consistent with the process of the positive half period.

As seen from the switching process, the circuit realizes soft switching and a high voltage conversion ratio, and the primary excitation current flows to the load. Meanwhile, an idle secondary side of the transformer is also used repeatedly as an excitation coil of the transformer, thereby reducing the number of turns and a resistance of the winding P. When the switching frequency fs is equal to the resonant frequency fr, a voltage conversion ratio is (2N+2+2): 1. As compared to the LLC, the circuit reduces a turn ratio of the transformer. Although the non-isolated LLC reduces the number of turns of the transformer, the voltage conversion ratio can only be an even number, which can not satisfy the requirement of the voltage conversion ratio to be an odd number. Moreover, as prior arts in this field, "Non-isolated 48V-to-1V Heterogeneous Integrated Voltage Converters for High Performance Computing in Data Centers", gong minxiang et al, 2020 IEEE 63RD INTERNATIONAL MIDWEST SYMPOSIUM ON CIRCUITS AND SYSTEMS (MWSCAS), IEEE, and patent document US2019/229613A1 disclose existing converters.

Therefore, it is still desired for a new non-isolated resonance circuit topology capable of realizing an odd voltage conversion ratio, and reducing loss of the transformer.

## SUMMARY

An object of the disclosure is to solve the problem that the non-isolated LLC circuit cannot realize an odd voltage conversion ratio, and provides a non-isolated hybrid resonance conversion circuit capable of realizing an odd voltage conversion ratio while reducing loss and volume of the transformer.

According to one aspect of the disclosure, provided is a conversion circuit according to claim 1.

Alternatively, the conversion circuit of the disclosure further comprises a third winding connected with the first resonant unit in series and electrically coupled between the first connection node and the first midpoint, wherein the third winding, the first winding and the second winding are coupled to one another.

Alternatively, in the conversion circuit of the disclosure, the first resonant unit comprises an inductor and a capacitor connected in series or in parallel.

Alternatively, in the conversion circuit of the disclosure, the first switching circuit further comprises (2m-2) switches connected in series to the first switch and the second switch, such that the first switching circuit comprises 2m switches connected in series, wherein adjacent switches of the 2m switches are connected to form connection nodes, the conversion circuit further comprises: (m-1) resonant units, the (m-1) resonant units and the first resonant units forming m resonant units, the x-th resonant unit of the m resonant units being connected in series to the third winding and being electrically coupled between the connection node of the (2x-1)th switch and the 2x-th switch of the 2m switches and the first midpoint; and (m-1) energy storage units each comprising an energy storage element, the k-th energy storage unit of the (m-1) energy storage units having one end connected to a connection node of the 2k-th switch and the (2k+1)th switch of the 2m switches, and the other end connected to the second rectifying branch, where m, x and k are integers, m≥2, 1≤x≤m and 1≤k≤(m-1).

Alternatively, in the conversion circuit of the disclosure, the energy storage element is a capacitor.

Alternatively, in the conversion circuit of the disclosure, each energy storage unit further comprises an inductor connected in series to the capacitor in the corresponding energy storage unit.

Alternatively, in the conversion circuit of the disclosure, wherein the other end of each of the (m-1) energy storage units is connected to one of: the first end of the load; the second midpoint; and the second end of the load.

Alternatively, in the conversion circuit of the disclosure, the first switching circuit further comprises (m-2) switches connected in series to the first switch and the second switch, such that the first switching circuit comprises m switches connected in series, wherein adjacent switches of the m switches are connected to form connection nodes, the conversion circuit further comprises (m-2) resonant units, the (m-2) resonant units and the first resonant unit forming (m-1) resonant units, the (2y-1)th resonant unit of the (m-1) resonant units is connected in series to the third winding and electrically coupled between the connection node of the (2y-1)th switch and the 2y-th switch of the m switches and the first midpoint, the 2z-th resonant unit of the (m-1) resonant units has one end connected to the connection node between the 2z-th switch and the (2z+1)th switch of the m switches, and the other end connected to the second rectifying branch, and m is an odd number, y and z are integers, m≥3, 1≤y≤m/2 and 1≤z≤(m-1)/2.

Alternatively, in the conversion circuit of the disclosure, the other end of the 2z-th resonant unit of the (m-1) resonant units is connected to one of: the first end of the load; the second midpoint; and the second end of the load.

Alternatively, in the conversion circuit of the disclosure, each of the (m-1) capacitors is further connected in series to a fourth winding, and the fourth winding, the first winding and the second winding are coupled to one another.

Alternatively, in the conversion circuit of the disclosure, the 2z-th resonant unit of the (m-1) resonant units is further connected in series to a fifth winding, and the fifth winding, the first winding and the second winding are coupled to one another.

Alternatively, in the conversion circuit of the disclosure, the first switching circuit further comprises a third switch and a fourth switch connected in series to the first switch and the second switch, the second switch and the third switch being connected to form a second connection node, and the third switch and the fourth switch being connected to form a third connection node, the conversion circuit further comprises: a first energy storage unit comprising an energy storage element, and having one end connected to the second connection node, and the other end connected to the second rectifying branch; and a second resonant unit electrically coupled between the second connection node and the first midpoint.

Alternatively, the conversion circuit of the disclosure further comprises a common inductor via which the first resonant unit and the second resonant unit are connected to the first midpoint.

Alternatively, in the conversion circuit of the disclosure, the first resonant unit and the second resonant unit share a resonant inductor.

Alternatively, the conversion circuit of the disclosure further comprises a third winding, wherein the first resonant unit is connected in series to the third winding and electrically coupled between the first connection node and the first midpoint , the second resonant unit is connected in series to the third winding and electrically coupled between the second connection node and the first midpoint, and the third winding, the first winding and the second winding are coupled to one another.

Alternatively, in the conversion circuit of the disclosure,the first switching circuit further comprises a third switch and a fourth switch connected in series to the first switch and the second switch, the second switch and the third switch being connected to form a second connection node, and the third switch and the fourth switch being connected to form a third connection node, the conversion circuit further comprises: a first energy storage unit comprising an energy storage element, and having one end connected to the second connection node, and the other end connected to the second rectifying branch; and a second resonant unit electrically coupled between the third connection node and the first midpoint.

Alternatively, the conversion circuit of the disclosure further comprises a third winding electrically connected in series to the first resonant unit and coupled between the first connection node and the first midpoint; and a sixth winding electrically connected in series to the second resonant unit and coupled between the third connection node and the first midpoint; wherein the sixth winding, the third winding, the first winding and the second winding are coupled to one another.

Alternatively, in the conversion circuit of the disclosure, the first resonant unit and the second resonant unit have the same resonant frequency.

Alternatively, the conversion circuit of the disclosure further comprises a second switching circuit and a third resonant unit, wherein the second switching circuit is connected in parallel to the first switching circuit, and comprises a fifth switch and a sixth switch connected in series to form a fourth connection node, the third resonant unit electrically coupled between the fourth connection node and the second midpoint.

Alternatively, the conversion circuit of the disclosure further comprises a third winding electrically connected in series to the first resonant unit and coupled between the first connection node and the first midpoint; and a seventh winding electrically connected in series to the third resonant unit and coupled between the fourth connection node and the second midpoint.

## BRIEF DESCRIPTION OF THE DRAWINGS

FIG. 1 illustrates a schematic diagram of a non-isolated LLC circuit in the prior art.
FIG. 2A illustrates an exemplary circuit according to a conversion circuit in one embodiment of the disclosure.
FIG. 2B illustrates a current flow path in a first half period of the circuit in FIG. 2A.
FIG. 2C illustrates a current flow path in a second half period of the circuit in FIG. 2A.
FIG. 2D illustrates waveforms of currents or voltages of partial elements in one working period of the circuit in FIG. 2A.
FIG. 3 illustrates an exemplary circuit according to a conversion circuit in another embodiment of the application.
FIG. 4 illustrates an exemplary circuit according to a conversion circuit in another embodiment of the application.
FIG. 5 illustrates an exemplary circuit according to a conversion circuit in another embodiment of the application.
FIG. 6 illustrates an exemplary circuit according to a conversion circuit in another embodiment of the application.
FIG. 7 illustrates an exemplary circuit according to a conversion circuit in another embodiment of the application.
FIG. 8 illustrates an exemplary circuit according to a conversion circuit in another embodiment of the application.
FIG. 9 illustrates an exemplary circuit according to a conversion circuit in another embodiment of the application.
FIG. 10 illustrates an exemplary circuit according to a conversion circuit in another embodiment of the application.
FIG. 11 illustrates an exemplary circuit according to a conversion circuit in another embodiment of the application.
FIG. 12 illustrates an exemplary circuit according to a conversion circuit in another embodiment of the application.
FIG. 13 illustrates an exemplary circuit according to a conversion circuit in another embodiment of the application.

**DETAILED DESCRIPTION**

Now the respective embodiments of the application are described in details with reference to the drawings, and one or more examples of the respective embodiments of the application are illustrated in the drawings. In the below descriptions of the drawings, the same reference sign indicates the same or similar components. In the below text, difference of the respective embodiments is only described. Each example is provided to aim to explain the technical solution, but it does not mean to limit the subject matter claimed by the application. In addition, as a part of one embodiment, the explained or described features can be applied to other embodiments, or combined with other embodiments to produce further examples. Hereinafter detailed explanations are made to intent to include such modifications and variations.

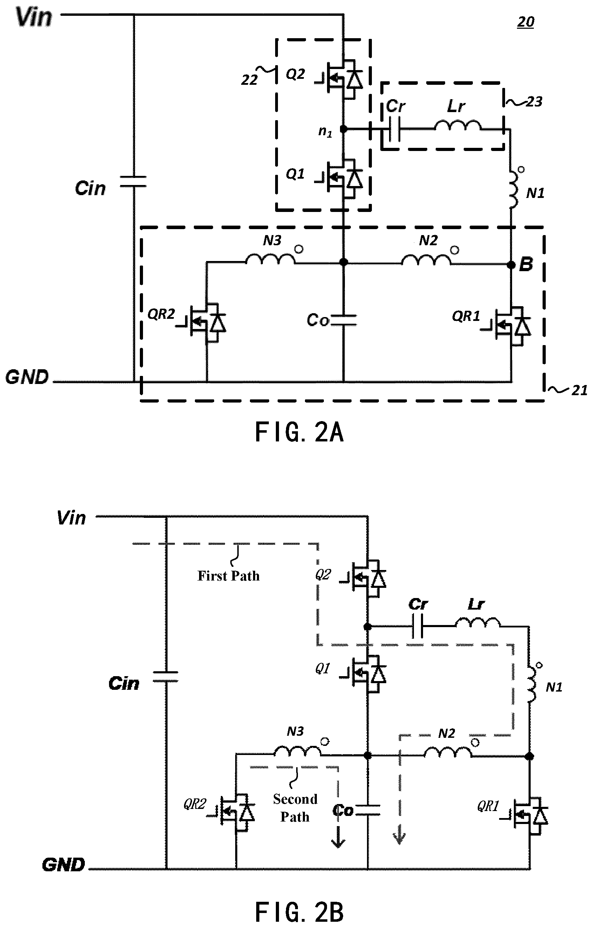

As shown in FIG. 2A, FIG. 2A illustrates an exemplary circuit according to a conversion circuit 20 in a first embodiment of the application. The circuit 20 receives an input voltage Vin from a power supply, the input voltage Vin is converted, and the converted voltage is outputted to a load. A capacitor Cin is connected in parallel to the power supply, and a capacitor Co is connected in parallel to the load.

The circuit 20 includes a full-wave rectifier unit 21, a switching circuit 22, a resonant unit 23, and a winding N1. The full-wave rectifier unit 21 is formed of a first rectifying branch and a second rectifying branch connected in parallel to the capacitor Co, the first rectifying branch has a winding N2 and a rectifying switch QR1 connected in series, and the second rectifying branch has a winding N3 and a rectifying switch QR2 connected in series. The switching circuit 22 includes switches Q1 and Q2 connected in series, and the resonant unit 23 includes a resonant capacitor Cr and a resonant inductor Lr connected in series. The winding N1 and the windings N2 and N3 in the full-wave rectifier unit 21 are coupled to one another, thereby forming a transformer.

The power supply and the load each have a first end and a second end, and the second end of the power supply is connected to the second end of the load (for example, grounded, i.e., connected to a ground end GND in FIG. 2A). The switching circuit 22 is connected between the first end of the power supply and the first end of the load. The full-wave rectifier unit 21 is connected between the first end and the second end of the load, i.e., as shown in FIG. 2A, the first rectifying branch and the second rectifying branch connected in parallel are further connected to the capacitor Co in parallel.

In the circuit 20, the resonant unit 23 is connected in series to the winding N1, such that a branch formed by the resonant unit 23 and the winding N1 connected in series has one end connected to a connection node formed by the switches Q1 and Q2 connected in series (i.e., a connection node $n_1$ in FIG. 2A), and the other end connected to a connection node formed by connecting the rectifying switch QR1 and the winding N2 in series (i.e., a connection node B in FIG. 2A).

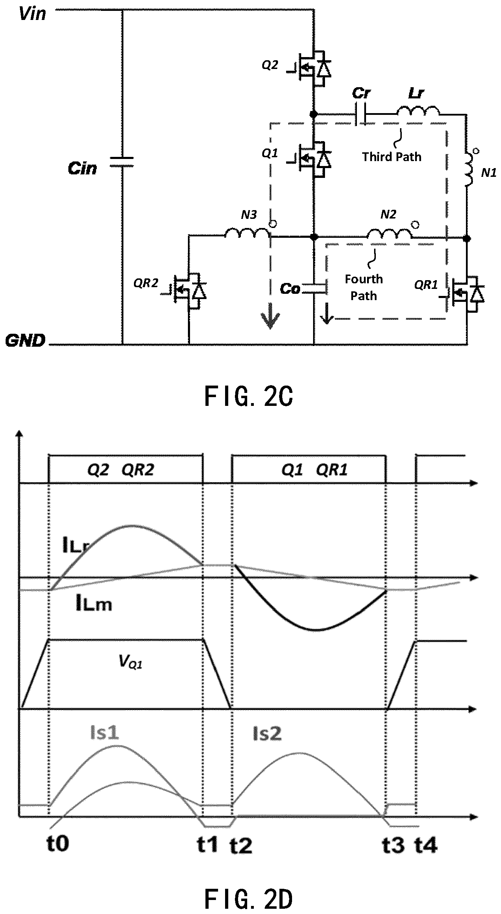

Hereinafter working process of the circuit 20 is described combining with FIGS. 2B-2D. FIG. 2B illustrates a current flow path of the circuit 20 in a first half period. FIG. 2C illustrates a current flow path of the circuit 20 in a second half period. FIG. 2D illustrates waveforms of currents or voltages of partial elements in one working period of the circuit 20. In FIG. 2D, $I_{Lr}$ represents a current flowing through the resonant unit 23, $I_{Lm}$ represents a current flowing through magnetic inductance of the transformer, $I_{S1}$ and $I_{S2}$ represent currents flowing through the windings N2 and N3, respectively, and $V_{Q1}$ represents a voltage across the switch Q1.

In one working period of the circuit 20, during a time period t0-t1 of the first half period, the switch Q2 and the rectifying switch QR2 are turned on, and the switch Q1 and the rectifying switch QR1 are turned off. During a time period t2-t3 of the second half period, the switch Q1 and the rectifying switch QR1 are turned on, and the switch Q2 and the rectifying switch QR2 are turned off. That is, the switch Q2 and the rectifying switch QR2 are turned on complementary to the switch Q1 and the rectifying switch QR1, and a duty ratio is about 0.5.

Next, in the circuit 20, taking a switching frequency fs equal to a resonant frequency fr, and a turn ratio of the winding N1, the winding N2 and the winding N3 in the transformer to be N: 1:1 as an example, working process of the circuit 20 is described.

During the time period t0-t1 of the first half period, a working state of the circuit 20 is shown in FIG. 2B. Here the switch Q2 and the rectifying switch QR2 are turned on, and the switch Q1 and the rectifying switch QR1 are turned off. On one hand, the resonant inductor Lr and the resonant capacitor Cr in the resonant unit 23 resonate. The resonant frequency is $$fr = 1/\left(2\pi \times \sqrt{Lr \times Cr}\right)$$, and a resonant current is i. The resonant current i flows to a load via the winding N1 and the winding N2 along a first path shown in FIG. 2B to supply energy to the load, instead of returning to the power supply. Meanwhile, on the other hand, the winding N3 induces excitation of the winding N1 and the winding N2, and an induced current is (N+1)i, and the induced current flows to the load along a second path shown in FIG. 2B to supply energy to the load end. Therefore, in the first half period, a current flowing to the load is (N+2)i.

During a time period t1-t2 of the first half period, the current flowing through the magnetic inductance charges parasitic capacitance of the switch Q2 and the rectifying switch QR2, and discharges parasitic capacitance of the switch Q1 and the rectifying switch QR1, thereby realizing soft switching.

During the time period t2-t3 of the second half period, a working state of the circuit 20 is shown in FIG. 2C. The switch Q1 and the rectifying switch QR1 are turned on, and the switch Q2 and the rectifying switch QR2 are turned off. On one hand, the resonant current i flows to the load via the winding N1 along a third path shown in FIG. 2C to power the load. Meanwhile, on the other hand, the winding N2 induces excitation of the winding N1, and an induced current is Ni, and the induced current flows to the load along a fourth path shown in FIG. 2C to supply energy to the load. Therefore, in the second half period, a current flowing to the load is (N+1)i.

As can be seen, in an entire working period of the circuit 20, a voltage conversion ratio is (2N+1+2):1, where the factor 2N is a voltage conversion ratio contributed by the winding N1 of the transformer, the factor 1 is a voltage conversion ratio contributed by using an idle winding of the transformer as excitation, and the factor 2 is a voltage conversion ratio contributed by an excitation current directly flowing to the load.

As compared to the non-isolated LLC circuit in the prior art shown in FIG. 1, difference of the circuit 20 lies in that a primary switch is connected to the load. Therefore, such circuit topology of the circuit 20 can realize an odd voltage conversion ratio while also having a primary current directly flowing to the load, and using the idle winding, thereby realizing advantages of a high efficiency and a high voltage conversion ratio.

The voltage conversion ratio of such circuit topology of the circuit 20 is odd, and in the case of the same voltage conversion ratio, the number of turns of the transformer can be reduced. Meanwhile, the current flowing to the winding N1 directly flows to the load, thereby further reducing loss and volume of the transformer.

Although the resonant unit 23 of the circuit 20 is formed by the resonant capacitor Cr and the resonant inductor Lr connected in series, the application is not limited thereto. For example, the resonant unit 23 also can be formed by the resonant capacitor Cr and the resonant inductor Lr connected in parallel.

Although the switching circuit 22 of the circuit 20 is formed by a single switch Q1 and a single switch Q2 connected in series, in some another embodiments, each of the switches Q1 and Q2 is further formed of a plurality of switching elements connected in series to reduce voltage stress of the single switch, or further formed of a plurality of switching elements connected in parallel to increase current flowing capacity of the switch.

Taking the turn ratio of the winding N1, the winding N2 and the winding N3 to be N: 1:1 as an example, the voltage conversion ratio of the circuit 20 is described. In a more general case, the voltage conversion ratio of the circuit 20 can be determined by formula (1):

$$[\frac{(K1+K2)}{K3} + \frac{K1}{2K2} + 2] : 1 \qquad (1)$$

In the formula (1), K1, K2 and K3 represent the specific number of turns of the winding N1, the winding N2 and the winding N3, respectively.

Although the circuit 20 describes the transformer formed by the winding N1, the winding N2 and the winding N3 coupled to one another, it is unnecessary to dispose the winding N1, i.e., the resonant unit can be directly coupled between the connection node $n_1$ and the connection node B. Here since the winding N1 (i.e., K1=0) does not exist, the realized voltage conversion ratio can be determined by the formula (1). For example, when the turn ratio of the winding N2 and the winding N3 is 1:1, and the winding N1 does not exist, it can be determined that the voltage conversion ratio of the circuit 20 is 3:1 by substituting the specific turn ratio into the formula (1).

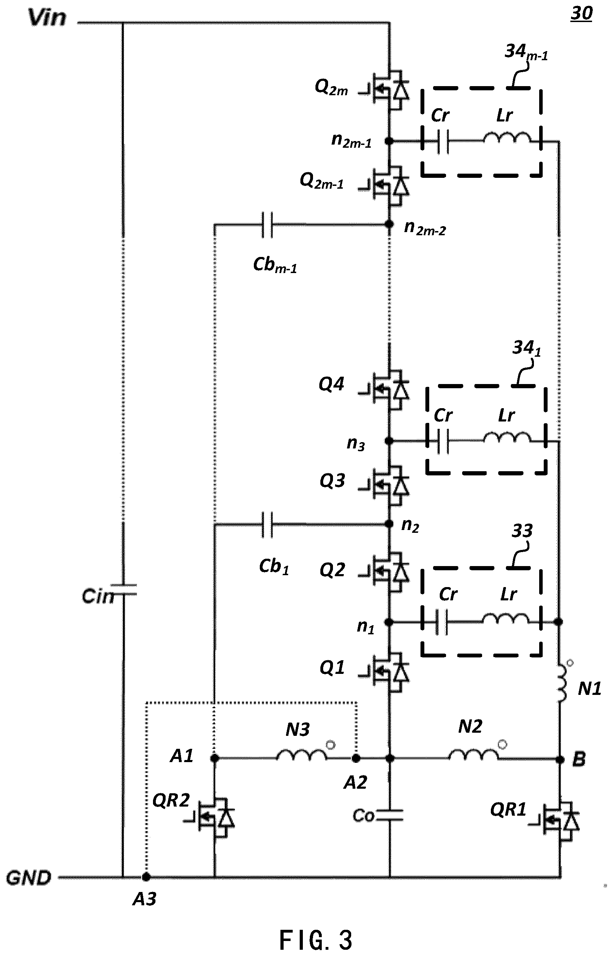

The circuit 20 described in FIGS. 2A-2D can be expanded to change the voltage conversion ratio. FIG. 3 illustrates a circuit 30 according to another embodiment of the application. Difference between the circuit 30 and the circuit 20 lies in that, in addition to the original two switches Q1 and Q2, the switching circuit further including (2m-2) switches, for example, switches Q3, Q4, ..., $Q_{2m-1}$ and $Q_{2m}$ shown in FIG. 3. The expanded (2m-2) switches (Q3, Q4, ..., $Q_{2m-1}$ and $Q_{2m}$) are connected in series to the original two switches Q1 and Q2, such that the switching circuit includes 2m switches connected in series, where m is an integer, and m≥2.

The circuit 30 further includes (m-1) energy storage elements (for example, blocking capacitors ($Cb_1$ to $Cb_{m-1}$) as the energy storage elements shown in FIG. 3) and (m-1) additional resonant units 34 (for example, $34_1$ to $34_{m-1}$ shown in FIG. 3). Therefore, the circuit 30 have a total of m resonant units. The m resonant units have the same resonant frequency. And resonance parameters of the m resonant units can be the same or different. Similar with the resonant unit 33, each of the resonant units 34 includes the resonant capacitor Cr and the resonant inductor Lr.

Therefore, the conversion circuit of the circuit 30 in FIG. 3 can be described as blow. The switching circuit has 2m switches connected in series, where m is an integer, and m≥2. The adj acent two switches of the 2m switches are connected to form a connection node, so there are (2m-1) connection nodes. For example, FIG. 3 illustrates a connection node $n_1$ formed by connecting the switches Q1 and Q2 in series, a connection node $n_2$ formed by connecting the switches Q2 and Q3 in series, a connection node $n_3$ formed by connecting the switches Q3 and Q4 in series, a connection node $n_{2m-2}$ formed by connecting the switch $Q_{2m-2}$ and the previous switch (not shown) in series, and a connection node $n_{2m-1}$

formed by connecting the switches $Q_{2m-1}$ and $Q_{2m}$ in series.

A subscript of the connection node is increased successively along a direction away from the load. For example, as shown in FIG. 3, the connection node between the switches Q1 and Q2 is closest to the load, so the connection node between the switches Q1 and Q2 is the first connection node, i.e., the connection node $n_1$, the connection node between the switch Q2 and the next switch Q3 adjacent to the switch Q2 is the second connection node, i.e., the connection node $n_2$, and so on, and the connection node between the switches $Q_{2m-1}$ and $Q_{2m}$ is the (2m-1)th connection node, i.e., the connection node $n_{2m-1}$.

Each of the m resonant units is connected between the corresponding connection node with an odd subscript (i.e., the connection nodes $n_1$, $n_3$, ..., $n_{2m-1}$) and a midpoint B of the first rectifying branch of the full-wave rectifier unit after being connected in series to the winding N1. One end of each of the (m-1) capacitors Cb is connected to the corresponding connection node with an even subscript (i.e., the connection nodes $n_2$, ..., $n_{2m-2}$), and the other end is connected to the second rectifying branch of the full-wave rectifier unit.

In other words, of the m resonant units, the x-th resonant unit, after being connected in series to the winding N1, has one end connected to the connection node between the (2x-1)th switch and the 2x-th switch of the 2m switches, where x is an integer, and $1 \leq x \leq m$.

For example, when x=1, the first (x) resonant unit (the resonant unit 33 in FIG. 3) of the m resonant units has one end connected to the connection node $n_1$ between the first (2x-1) switch (the switch Q1 in FIG. 3) and the second (2x) switch (the switch Q2 in FIG. 3), and the other end connected to the midpoint B of the first rectifying branch of the full-wave rectifier unit after being connected in series to the winding N1. For another example, when x=2, the second (x) resonant unit (the resonant unit $34_1$ in FIG. 3) of the m resonant units has one end connected to the connection node $n_3$ between the third (2x-1) switch (the switch Q3 in FIG. 3) and the fourth (2x) switch (the switch Q4 in FIG. 3), and the other end connected to the midpoint B of the first rectifying branch of the full-wave rectifier unit after being connected in series to the winding N1. For another example, when x=m, the m-th (x) resonant unit (the resonant unit $34_{m-1}$ in FIG. 3) of the m resonant units has one end connected to the connection node $n_{2m-1}$ between the (2m-1)th (2x-1) switch (the switch $Q_{2m-1}$ in FIG. 3) and the 2m-th (2x) switch (the switch $Q_{2m}$ in FIG. 3), and the other end connected to the midpoint B of the first rectifying branch of the full-wave rectifier unit after being connected in series to the winding N1.

Moreover, of the (m-1) capacitors Cb, the k-th capacitor has one end connected to the connection node between the 2k-th switch and the (2k+1)th switch of the 2m switches, and the other end connected to the second rectifying branch of the full-wave rectifier unit, where k is an integer, and $1 \leq k \leq m-1$.

For example, when k=1, the first (k) capacitor (the capacitor $Cb_1$ in FIG. 3) has one end connected to the connection node $n_2$ between the second (2k) switch (the switch Q2 in FIG. 3) and the third switch (the switch Q3 in FIG. 3), and the other end connected to the second rectifying branch of the full-wave rectifier unit. For another example, when k=(m-1), the (m-1)th (k) blocking capacitors (the blocking capacitor $Cb_{m-1}$ in FIG. 3) has one end connected to the connection node $n_{2m-2}$ between the (2m-2)th (2k) switch (the previous switch adjacent to the switch $Q_{2m-1}$ in FIG. 3, not shown) and the (2m-1)th (2k+1) switch (the switch $Q_{2m-1}$ in FIG. 3), and the other end connected to the second rectifying branch of the full-wave rectifier unit.

As described above, the other end of the (m-1) capacitors Cb is connected to the second rectifying branch of the full-wave rectifier unit of the circuit 30. To be specific, the other end of the capacitor Cb can be connected to various positions of the second rectifying branch. For example, as shown in FIG. 3, the other end of the capacitor Cb can be connected to (1) midpoint A1 formed by connecting the winding N3 and the rectifying switch QR2 in series in the second rectifying branch, (2) point A2, i.e., the first end of the load, or (3) point A3, i.e., the second end of the load (for example, a ground end GND).

As for the circuit 30 in FIG. 3, the number of switches in the switching circuit of the circuit 30 is M (i.e., M=2m), and a turn ratio of the winding N1, the winding N2 and the winding N3 of the transformer is N: 1:1. When the other end of the capacitor Cb is connected to the midpoint A1, the voltage conversion ratio is $(M \times (N+2)-1)$: 1, when the other end of the capacitor Cb is connected to the point A2, the voltage conversion ratio is $(M \times N+M+1):1$, and when the other end of the capacitor Cb is connected to the point A3, the voltage conversion ratio is $(M \times N+M+1):1$, thereby expanding the conversion ratio of the conversion circuit.

Similarly, other suitable turn ratio can be chosen for the winding N1, the winding N2 and the winding N3. In a more general case, when the other end of the capacitor Cb is connected to the midpoint A1, the voltage conversion ratio of the circuit 30 can be determined by formula (2), when the other end of the capacitor Cb is connected to the point A2, the voltage conversion ratio of the circuit 30 can be determined by formula (3), and when the other end of the capacitor Cb is connected to the point A3, the voltage conversion ratio of the circuit 30 can be determined by formula (4):

$$\left[ \frac{\frac{M*(K1+K2)}{2}}{K3} + \frac{\frac{M*K1}{2}+\left(\frac{M}{2}-1\right)*K2}{K2} + M \right] : 1 \qquad (2)$$

$$\left[\frac{\frac{M}{2}*K1+\frac{M}{2}*K2-\left(\frac{M}{2}-1\right)*K3}{K3} + \frac{M*K1}{2*K2} + M\right] : 1 \qquad (3)$$

$$\left[\frac{M*(K1+K2)}{2*K3} + \frac{M*K1}{2*K2} + \frac{M}{2} + 1\right] : 1 \qquad (4)$$

In the formulas (2)-(4), K1, K2 and K3 are the number of turns of the winding N1, the winding N2 and the winding N3, respectively, and M is the number of switches in the switching circuit of the circuit 30 (i.e., M=2m). Similarly, it is unnecessary to dispose the winding N1 in some other embodiments.

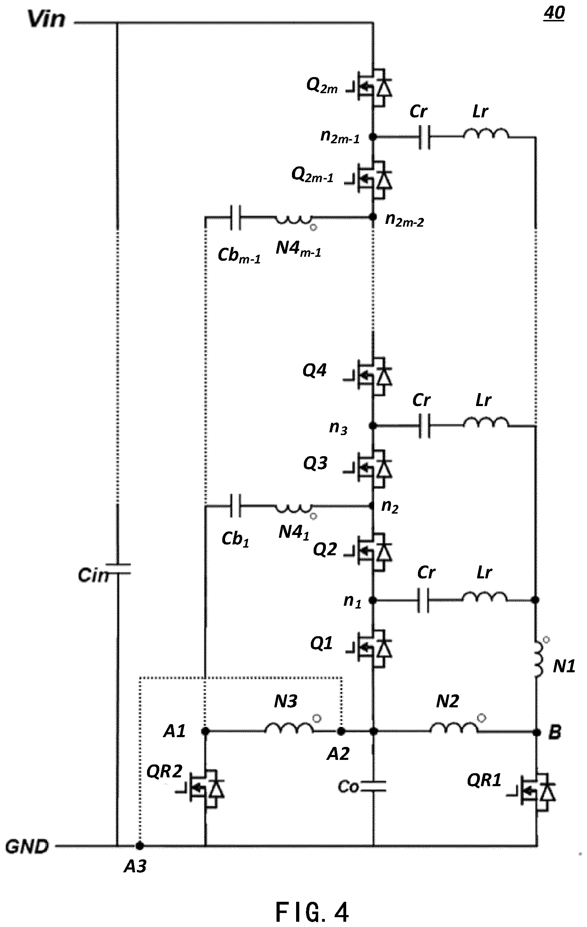

FIG. 3 illustrates that the capacitor Cb is connected to the corresponding connection node with even subscript and the second rectifying branch of the full-wave rectifier unit. In some embodiments, some windings can be further added to change the voltage conversion ratio. For example, FIG. 4 illustrates a circuit 40 according to another embodiment of the application.

Difference between the circuit 40 in FIG. 4 and the circuit 30 in FIG. 3 lies in that in addition to connecting the capacitor Cb as an energy storage element between the second rectifying branch of the full-wave rectifier unit and the connection node with even index, each capacitor Cb is further connected in series to an additional winding N4 (such as windings $N4_1$ and $N4_{m-1}$ shown in FIG. 4).

Here as for the circuit 40 in FIG. 4, the number of switches in the switching circuit of the circuit 40 is M (i.e., M=2m), and a turn ratio of the additional windings N4 ($N4_1$ and $N4_{m-1}$), the winding N1, the winding N2 and the winding N3 of the transformer is N:N:1:1. When the other end of the capacitor Cb is connected to the midpoint A1, the voltage conversion ratio is ((2M-2)×N+2M-1):1, when the other end of the capacitor Cb is connected to the point A2, the voltage conversion ratio is ((2M-2)×N+2M+1):1, and when the other end of the capacitor Cb is connected to the point A3, the voltage conversion ratio is ((2M-2)×N+2M+1):1, thereby further expanding the conversion ratio of the conversion circuit based on the circuit 30 in FIG. 3.

Similarly, other suitable turn ratio can be chosen for the winding N1, the winding N2, the winding N3 and the winding N4. In a more general case, when the other end of the capacitor Cb is connected to the midpoint A1, the voltage conversion ratio of the circuit 40 can be determined by formula (5), when the other end of the capacitor Cb is connected to the point A2, the voltage conversion ratio of the circuit 40 can be determined by formula (6), and when the other end of the capacitor Cb is connected to the point A3, the voltage conversion ratio of the circuit 40 can be determined by formula (7):

$$\left[\frac{K1+K2}{K3} + \frac{K1}{K2} + M + \frac{\left(\frac{M}{2}-1\right)*(K1+K2)+\sum_{i=1}^{m-1} K4_i}{K3} + \frac{\left(\frac{M}{2}-1\right)*(K1+K3)+\sum_{i=1}^{m-1} K4_i}{K2}\right] : 1 \quad (5)$$

$$\left[\frac{K1+K2}{K3} + M + \frac{\left(\frac{M}{2}-1\right)*(K1+K2-K3)+\sum_{i=1}^{m-1} K4_i}{K3} + \frac{\frac{M}{2}*K1+\sum_{i=1}^{m-1} K4_i}{K2}\right] : 1 \qquad (6)$$

$$\left[\frac{K1+K2}{K3} + \frac{M}{2} + 1 + \frac{\left(\frac{M}{2}-1\right)*(K1+K2)+\sum_{i=1}^{m-1} K4_i}{K3} + \frac{\frac{M}{2}*K1+\sum_{i=1}^{m-1} K4_i}{K2}\right] : 1 \qquad (7)$$

In the formulas (5)-(7), K1, K2 and K3 are the number of turns of the winding N1, the winding N2 and the winding N3, respectively, $K4_i$ is the number of turns of the respective windings N4, and M is the number of switches in the switching circuit of the circuit 40 (i.e., M=2m). Similarly, it is unnecessary to dispose the winding N1 in some other embodiments.

Although FIGS. 3 and 4 illustrate the case where the blocking capacitor Cb serves as an energy storage element, the disclosures are not limited thereto, and the resonant unit also can serve as the energy storage element. Here the capacitor of the resonant unit as the energy storage element functions as the blocking capacitor, and also resonates with the inductor of the resonant unit.

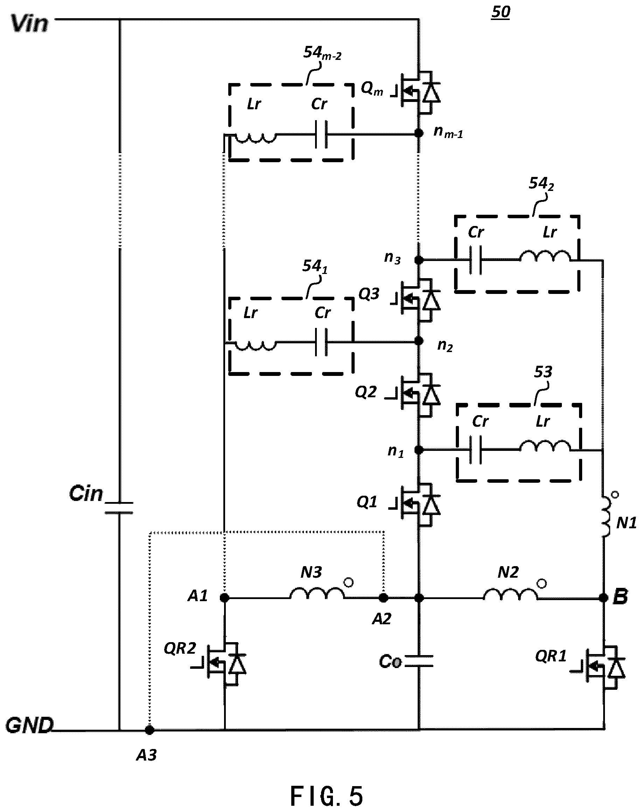

FIG. 5 illustrates a circuit 50 according to another embodiment of the application, and serves as another expanding form of the circuit 20 in FIG. 2.

Difference between the circuit 50 in FIG. 5 and the circuit 20 lies in that in addition to the two switches Q1 and Q2, the switching circuit further includes (m-2) switches, for example, switches Q3, ..., $Q_m$ shown in FIG. 5. The additional (m-2) switches (Q3, ..., $Q_m$) are connected in series to the two switches Q1 and Q2, such that the switching circuit includes m switches connected in series, where m is odd, and m≥3.

Corresponding to the switching circuit of the expanded circuit 50, the circuit 50 further includes (m-2) resonant units 54 (for example, resonant units $54_1$, $54_2$ and $54_{m-2}$ shown in FIG. 5). Therefore, the (m-2) resonant units 54 and the resonant unit 53 together form (m-1) resonant units. The resonant unit 54 includes a resonant capacitor Cr and a resonant inductor Lr. These (m-1) resonant units have the same resonant frequency. And resonance parameters can be the same or different.

Specifically, the conversion circuit of the circuit 50 in FIG. 5 can be described as blow. The switching circuit has m switches connected in series, where m is odd, and m≥3. The adjacent two switches of the m switches are connected to form connection nodes, so there are (m-1) connection nodes. For example, FIG. 5 illustrates a connection node $n_1$ formed by connecting the switches Q1 and Q2 in series, a connection node $n_2$ formed by connecting the switches Q2 and Q3 in series, a connection node $n_3$ formed by connecting the switch Q3 and the previous switch (not shown) in series, and a connection node $n_{m-1}$ formed by connecting the switch $Q_m$ and the previous switch (not shown) in series.

A subscript of the connection node is increased successively along a direction away from the load. For example, as shown in FIG. 5, the connection node between the switches Q1 and Q2 is closest to the load, so the connection node between the switches Q1 and Q2 is the first connection node, i.e., the connection node $n_1$, the connection node between the switch Q2 and the next switch Q3 adjacent to the switch Q2 is the second connection node, i.e., the connection node $n_2$, and so on, and the connection node between the switch $Q_m$ and the previous switch is the (m-1)th connection node, i.e., the connection node $n_{m-1}$.

Each of a part of the (m-1) resonant units in the circuit 50 is connected between the corresponding connection node with an odd subscript and a midpoint B of the first rectifying branch of the full-wave rectifier unit after being connected in series to the winding N1. Each of the other part of the (m-1) resonant units in the circuit 50 has one end connected to the corresponding connection node with an even subscript, and the other end connected to the second rectifying branch of the full-wave rectifier unit.

In other words, of the (m-1) resonant units, the (2y-1)th resonant unit is connected between the connection node of the (2y-1)th switch and the 2y-th switch of the m switches and the midpoint B of the first rectifying branch of the full-wave rectifier unit after being connected in series to the winding N1, where y is an integer, and 1≤y≤m/2.

For example, when y=1, of the (m-1) resonant units, the first (2y-1) resonant unit (the resonant unit 53 in FIG. 5) is connected between the connection node $n_1$ of the first (2y-1) resonant unit (the switch Q1 in FIG. 5) and the second (2y) switch (the switch Q2 in FIG. 5) and the midpoint B of the first rectifying branch of the full-wave rectifier unit after being connected in series to the winding N1. For another example, when y=2, of the (m-1) resonant units, the third (2y-1) resonant unit (the resonant unit $54_2$ in FIG. 5) is connected between the connection node $n_3$ of the third (2y-1) switch (the switch Q3 in FIG. 5) and the fourth (2y) switch (the next switch of the switch Q3) and the midpoint B of the first rectifying branch of the full-wave rectifier unit after being connected in series to the winding N1.

Of the (m-1) resonant units, the 2z-th resonant unit has one end connected to the node between the 2z-th switch and the (2z+1)th switch of the m switches, and the other end connected to the second rectifying branch of the full-wave rectifier circuit, where z is an integer, and 1≤z≤(m-1)/2.

For example, when z=1, of the (m-1) resonant units, the second (2z) resonant unit (the resonant unit $54_1$ in FIG. 5) has one end connected to the connection node $n_2$ between the second (2z) switch (the switch Q2 in FIG. 5) and the third (2z+1) switch (the switch Q3 in FIG. 5), and the other end connected to the second rectifying branch of the full-wave rectifier circuit.

As described above, the other end of the resonant unit is connected to the resonant unit with even subscript in the (m-1) resonant units being connected to the second rectifying branch of the full-wave rectifier unit of the circuit 50. Specifically, the other end of these resonant units can be connected to various positions of the second rectifying branch. For example, as shown in FIG. 5, the other end of these resonant units can be connected to (1) midpoint A1 formed by connecting the winding N3 and the rectifying switch QR2 in series in the second rectifying branch, (2) point A2, i.e., the first end of the capacitor Co, and (3) point A3, i.e., the second end of the capacitor Co (for example, a ground end GND).

As for the circuit 50 in FIG. 5, assuming that a turn ratio of the winding N1, the winding N2 and the winding N3 of the transformer is N: 1:1, when the other end of the resonant unit connected to the even-numbered connection node is connected to the midpoint A1, the voltage conversion unit is ((m-1)×N+2m-1):1, when the other end of the resonant unit connected to the even-numbered connection node is connected to the point A2, the voltage conversion unit is ((m-1)×N+m):1, and when the other end of the resonant unit connected to the even-numbered connection node is connected to the point A3, the voltage conversion unit is ((m-1)×N+m):1, thereby expanding the conversion ratio of the conversion circuit.

Similarly, other suitable turn ratio can be chosen for the winding N1, the winding N2 and the winding N3. In a more general case, when the other end of the resonant unit connected to the even-numbered connection node is connected to the midpoint A1, the voltage conversion ratio of the circuit 50 can be determined by formula (8), when the other end of the resonant unit connected to the even-numbered connection node is connected to the point A2, the voltage conversion ratio of the circuit 50 can be determined by formula (9), and when the other end of the resonant unit connected to the even-numbered connection node is connected to the point A3, the voltage conversion ratio of the circuit 50 can be determined by formula (10):

$$\left[\frac{(m-1)*(K1+K3)}{2*K2} + \frac{(m-1)*(K1+K2)}{2*K3} + m\right] : 1 \tag{8}$$

$$\left[\frac{(m-1)*K1}{2*K2} + \frac{(m-1)*(K1+K2-K3)}{2*K3} + m\right] : 1 \tag{9}$$

$$\left[\frac{(m-1)*K1}{2*K2} + \frac{(m-1)*(K1+K2)}{2*K3} + \frac{m+1}{2}\right] : 1 \tag{10}$$

In the formulas (8)-(10), K1, K2 and K3 are the number of turns of the winding N1, the winding N2 and the winding N3, respectively, and m is the number of switches in the circuit 50. Similarly, it is unnecessary to dispose the winding N1 in some other embodiments.

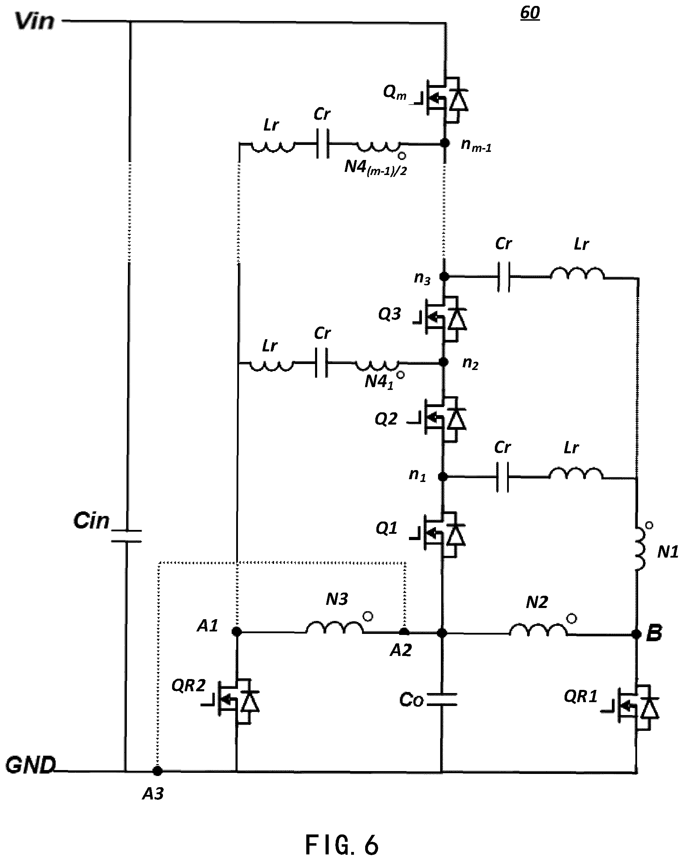

FIG. 5 illustrates that a part of resonant units of the (m-1) resonant units is connected to the corresponding connection node with even subscript and the second rectifying branch of the full-wave rectifier unit. In some embodiments, some windings can be further added to change the voltage conversion ratio. For example, FIG. 6 illustrates a circuit 60 according to another embodiment of the application.

Difference between the circuit 60 in FIG. 6 and the circuit 30 in FIG. 3 lies in that in addition to connecting the resonant units between the second rectifying branch of the full-wave rectifier unit and the connection node with even subscript, each of these resonant units is further connected in series to an additional winding N4 (windings $N4_1$ and $N4_{(m-1)/2}$ shown in FIG. 6).

Here as for the circuit 40 in FIG. 6, assuming that a turn ratio of the additional windings N4 (the windings $N4_1$ to $N4_{(m-1)/2}$), the winding N1, the winding N2 and the winding N3 in the transformer is N:N:1:1, when the other end of the resonant unit connected to the even-numbered connection node is connected to the midpoint A1, the voltage conversion unit is $(2\times(m-1)\times N+2m-1):1$, when the other end of the resonant unit connected to the even-numbered connection node is connected to the point A2, the voltage conversion unit is $(2\times(m-1)\times N+m):1$, and when the other end of the resonant unit connected to the even-numbered connection node is connected to the point A3, the voltage conversion unit is $(2\times(m-1)\times N+m): 1$, thereby further expanding the conversion ratio of the conversion circuit based on the circuit 50 in FIG. 5.

Similarly, other suitable turn ratio can be chosen for the winding N1, the winding N2, the winding N3 and the windings N4. In a more general case, when the other end of the resonant unit connected to the even-numbered connection node is connected to the midpoint A1, the voltage conversion ratio of the circuit 60 can be determined by formula (11), when the other end of the resonant unit connected to the even-numbered connection node is connected to the point A2, the voltage conversion ratio of the circuit 60 can be determined by formula (12), and when the other end of the resonant unit connected to the even-numbered connection node is connected to the point A3, the voltage conversion ratio of the circuit 60 can be determined by formula (13):

$$\left[\frac{\frac{(m-1)*(K1+K3)}{2}+\sum_{i=1}^{\frac{m-1}{2}} K4_i}{K2} + \frac{\frac{(m-1)*(K1+K2)}{2}+\sum_{i=1}^{\frac{m-1}{2}} K4_i}{K3} + m\right]: 1 \tag{11}$$

$$\left[\frac{\frac{(m-1)}{2}*K1+\sum_{i=1}^{(m-1)/2} K4_i}{K2} + \frac{\frac{(m-1)*(K1+K2-K3)}{2}+\sum_{i=1}^{(m-1)/2} K4_i}{N3} + m\right]: 1 \tag{12}$$

$$\left[\frac{\frac{(m-1)*K1}{2}+\sum_{i=1}^{\frac{m-1}{2}} K4_i}{K2} + \frac{\frac{(m-1)*(K1+K2)}{2}+\sum_{i=1}^{\frac{m-1}{2}} K4_i}{K3} + \frac{m+1}{2}\right] : 1 \tag{13}$$

In the formulas (11)-(13), K1, K2 and K3 are the number of turns of the winding N1, the winding N2 and the winding N3, respectively, $K4_i$ is the number of turns of the respective windings N4, and m is the number of switches in the circuit 60. Similarly, it is unnecessary to dispose the winding N1 in some other embodiments.

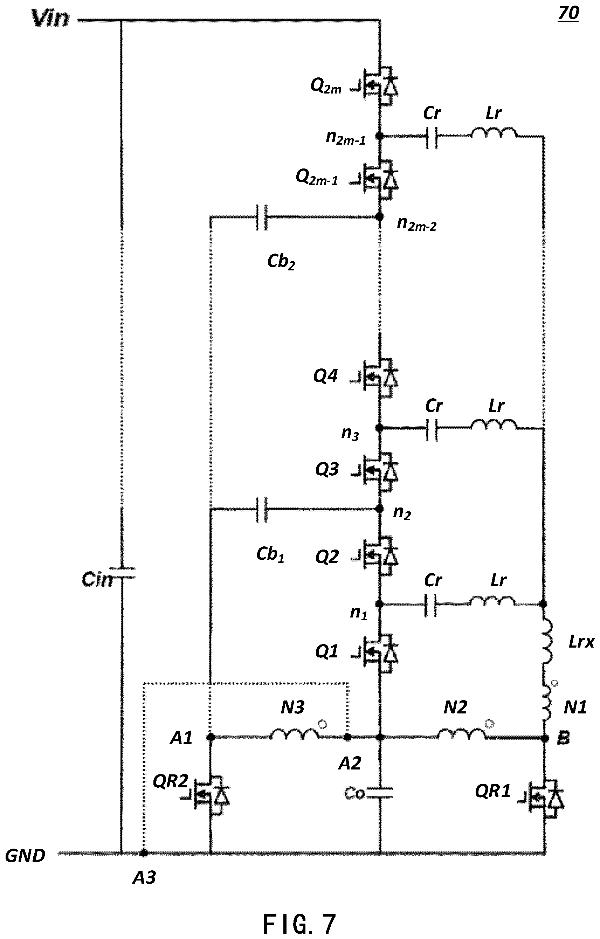

FIG. 7 illustrates an exemplary circuit 70 according to the conversion circuit in another embodiment of the application.

Difference between the circuit 70 and the circuit 30 in FIG. 3 lies in adding an inductor Lrx connected in series to the winding N1. Here a resonant frequency is:

$$fr = 1 \Big/ \left( 2\pi \times \sqrt{\big((Lr + 2 \times Lrx) \times Cr\big)} \right)$$

The inductor Lrx can be leakage inductance of the transformer. The inductance of the resonant inductor Lr can be reduced by using leakage inductance of the transformer, thereby decreasing use of components, and reducing volume of the converter.

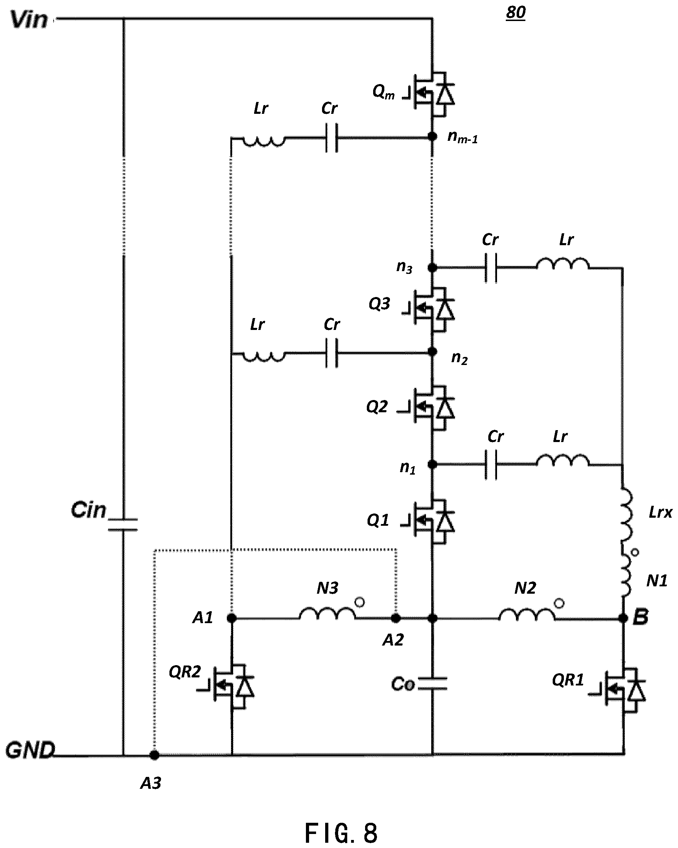

Although FIG. 7 is modified on the basis of the circuit 30 in FIG. 3, it shall be noticed that similar modifications can also be made to the circuit 50 in FIG. 5, as shown in FIG. 8. Here details are not described.

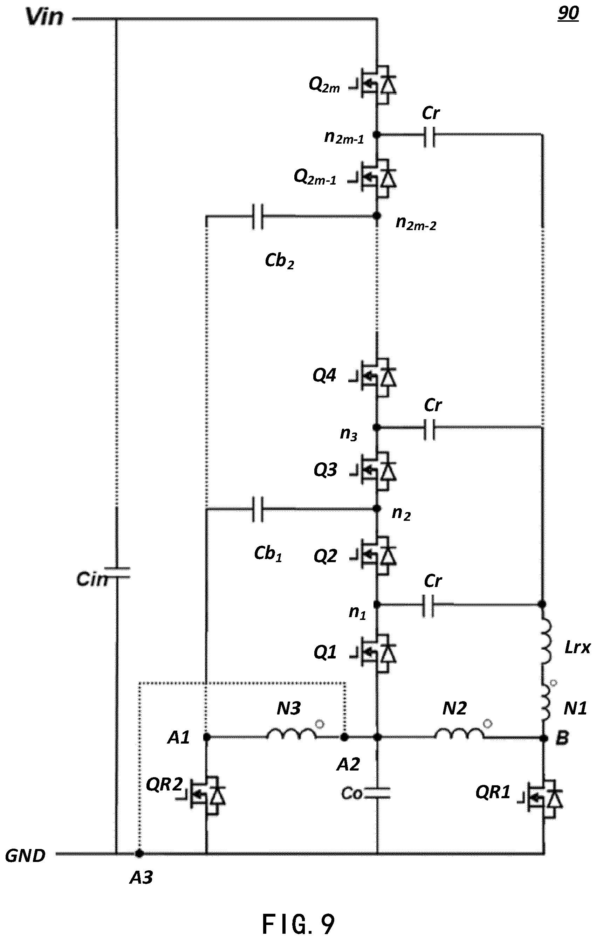

FIG. 9 illustrates an exemplary circuit 90 according to the conversion circuit in another embodiment of the application.

Difference between the circuit 90 and the circuit 30 in FIG. 3 lies in that when resonance parameters of the m resonant units are the same, respective resonant inductors in these resonant units can be combined into an inductor Lrx to be connected in series to the winding N1. Here a resonant frequency is:

$$fr = 1 \Big/ \left( 2\pi \times \sqrt{(2 \times Lrx \times Cr)} \right)$$

In this situation, the circuit is operated at a fixed working frequency, leakage inductance required is small, and leakage inductor of the transformer can be directly used as the resonant inductor Lrx, thereby reducing number and volume of the components.

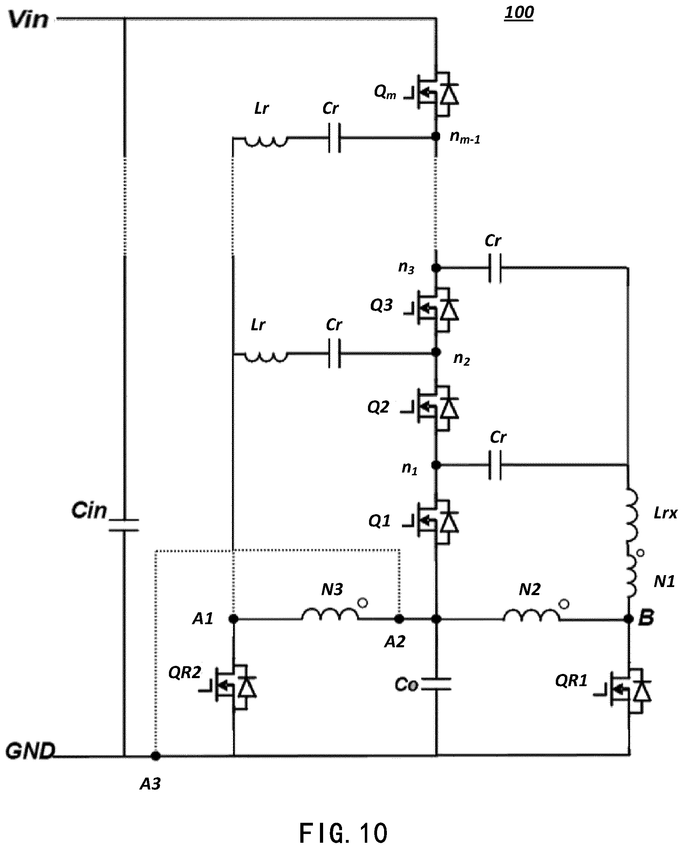

Although FIG. 9 is modified on the basis of the circuit 30 in FIG. 3, it shall be noticed that similar modifications can also be made to the circuit 50 in FIG. 5, as shown in FIG. 10. Here details are not described.

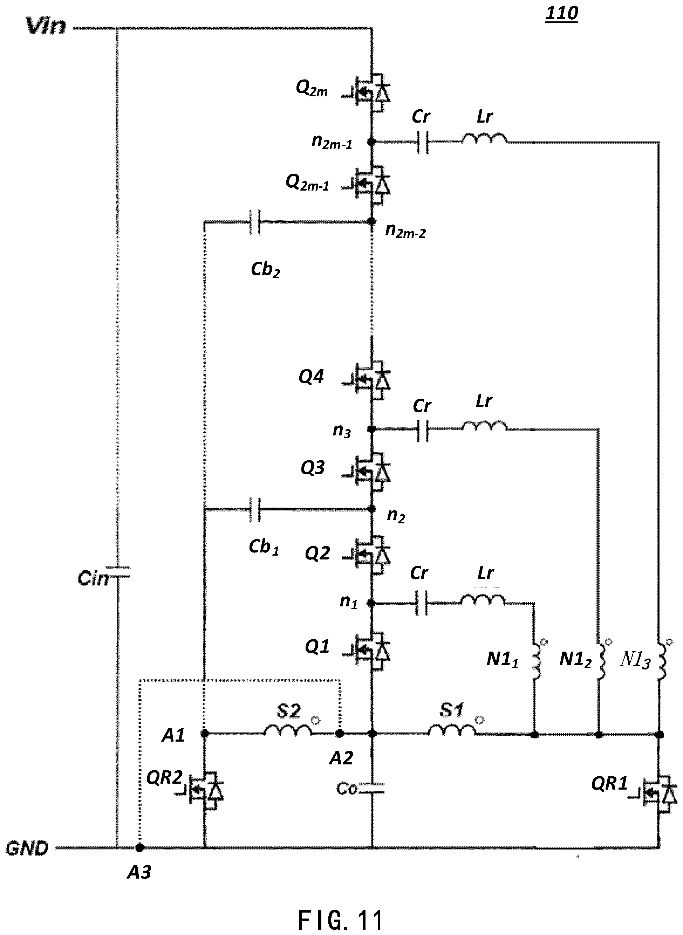

FIG. 11 illustrates an exemplary circuit 110 according to the conversion circuit in another embodiment of the application.

Difference between the circuit 110 and the circuit 30 in FIG. 3 lies in that the transformer has a plurality of windings (windings $N1_1$, $N1_2$ and $N1_3$ shown in FIG. 11) connected in series to the m resonant units. The circuit can also achieve the function of saving the resonant inductor by using leakage inductor of the transformer.

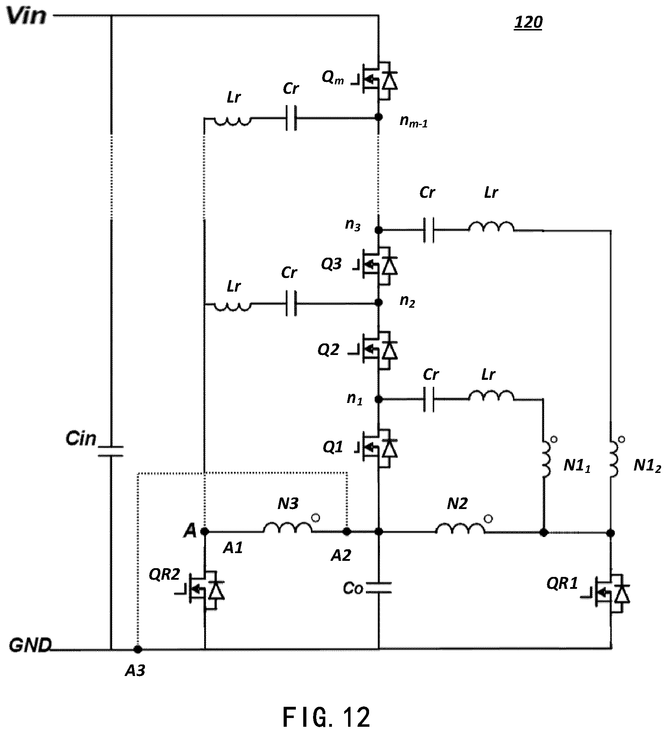

Although FIG. 11 is modified on the basis of the circuit 30 in FIG. 3, it shall be noticed that similar modifications can also be made to the circuit 50 in FIG. 5, as shown in FIG. 12. Here details are not described.

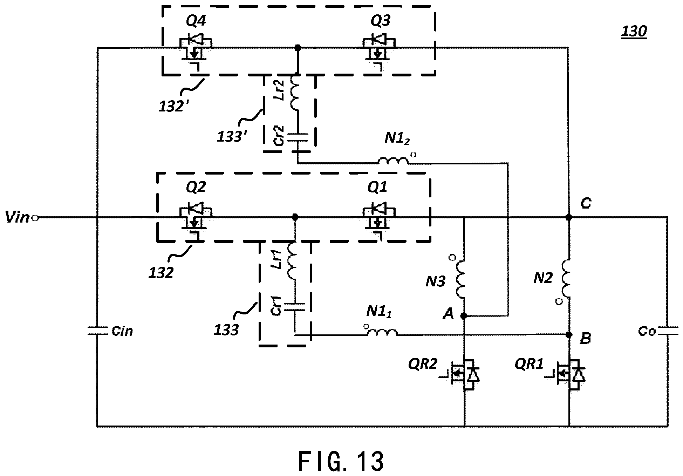

FIG. 13 illustrates an exemplary circuit 130 according to the conversion circuit in another embodiment of the application.

Difference between the circuit 130 in FIG. 13 and the circuit 20 in FIG. 2A lies in that the circuit 130 has two switching circuits 132 and 132' connected in parallel. The switching circuit 132 has switches Q1 and Q2 connected in series, and the switching circuit 132' has switches Q3 and Q4 connected in series.

A resonant unit 133 is connected between a connection node of the switches Q1 and Q2 and a midpoint B of the switch QR1 and the winding N2 of the first rectifying branch of the full-wave rectifier unit after being connected in series to the winding $N1_1$, and a resonant unit 133' is connected between a connection node of the switches Q3 and Q4 and a midpoint A of the switch QR2 and the winding N3 of the second rectifying branch of the full-wave rectifier unit after being connected in series to the winding $N1_2$.

In operation of the circuit 130, Q2, QR2 and Q3 are turned on simultaneously, and QR1, Q1 and Q4 are complementarily turned on, and a duty ratio is about 0.5. A turn ratio of the windings $N1_1$, N2, N3 and $N1_2$ of the transformer is N:1:1:N, and the circuit 130 can also realize a voltage conversion ratio of (2N+1+2):1. As compared to the circuit 20 shown in FIG. 2A, an additional switching circuit is added in the circuit 130. The additional switching circuit which includes switches Q3 and Q4 connected in series, is connected between the first end of the power supply and the first end of the load. The branch which includes the resonant unit 133' and the winding $N1_2$ connected in series, is connected between the node connecting the switches Q3 and Q4 and the node connecting the winding N3 and QR2. The switching circuit 133' and the switching circuit 133 work alternatively, such that current stresses of the switches Q1-Q4 are a half of that of the switches Q1 and Q2 in the circuit 20 of FIG. 2A, and currents of the rectifying switches QR1 and QR2 are more balanced.

**Claims**

1. A conversion circuit (20) configured to convert a voltage (Vin) of a power supply and powering a load by the converted voltage, the power supply and the load each comprising a first end and a second end, and the second end of the power supply being connected to the second end of the load, the conversion circuit comprising

   a full-wave rectifier circuit (21) connected in parallel to the load having a first rectifying branch and a second rectifying branch connected in parallel, the first rectifying branch having a first rectifying switch (QR1) and a first winding (N2) connected in series, the first rectifying switch and the first winding being connected to form a first midpoint(B), the second rectifying branch having a second rectifying switch (QR2) and a second winding (N3) connected in series, the second rectifying switch and the second winding being connected to form a second midpoint(A1), wherein the first winding (N2) and the second winding (N3) are coupled to each other;
   a first switching circuit (22) being connectable between the first end of the power supply and the first end of the load, and comprising a first switch (Q1) and a second switch (Q2) connected in series to form a first connection node (n1); and
   a first resonant unit (23) coupled between the first connection node and the first midpoint;
   **characterized in that** the first switching circuit (22) is connected to the second midpoint (A1) through the second winding (N3).

2. The conversion circuit according to claim 1, further comprising:
   a third winding (N1) connected with the first resonant unit (23) in series and electrically coupled between the first connection node and the first midpoint, wherein the third winding (N1), the first winding (N2) and the second winding (N3) are coupled to one another.

3. The conversion circuit according to claim 1, wherein,

   the first switching circuit further comprises (2m-2) switches connected in series to the first switch and the second switch, such that the first switching circuit comprises 2m switches (Q1, Q2, ..., $Q_{2m}$) connected in series, wherein adjacent switches of the 2m switches are connected to form connection nodes (n1, n2, ..., $n_{2m-1}$),
   the conversion circuit further comprises:

   (m-1) resonant units ($34_1$, ..., $34_{m-1}$), the (m-1) resonant units and the first resonant units forming m resonant units, the x-th resonant unit of the m resonant units being connected in series to the third winding and being electrically coupled between the connection node of the (2x-1)th switch and the 2x-th switch of the 2m switches and the first midpoint; and
   (m-1) energy storage units each comprising an energy storage element, the k-th energy storage unit of the (m-1) energy storage units having one end connected to a connection node of the 2k-th switch and the (2k+1)th switch of the 2m switches, and the other end connected to the second rectifying branch, where

   m, x and k are integers, m≥2, 1≤x≤m and 1≤k≤(m-1).

4. The conversion circuit according to claim 3, wherein the other end of each of the (m-1) energy storage units is connectable to one of:

   the first end (A2) of the load;
   and
   the second end (A3) of the load;
   or wherein the other end of each of the (m-1) energy storage units is connected to the second midpoint (A1).

5. The conversion circuit according to claim 1, wherein,

   the first switching circuit further comprises (m-2) switches connected in series to the first switch and the second switch, such that the first switching circuit comprises m switches (Q1, Q2, ..., $Q_m$) connected in series, wherein adjacent switches of the m switches are connected to form connection nodes,
   the conversion circuit further comprises (m-2) resonant units ($54_1$, $54_2$, ..., $54_{m-2}$), the (m-2) resonant units and the first resonant unit (53) forming (m-1) resonant units,
   the (2y-1)th resonant unit of the (m-1) resonant units is connected in series to the third winding (N1) and electrically coupled between the connection node of the (2y-1)th switch and the 2y-th switch of the m switches and the first midpoint,
the 2z-th resonant unit of the (m-1) resonant units has one end connected to the connection node between the 2z-th switch and the (2z+1)th switch of the m switches, and the other end connected to the second rectifying branch, and
m is an odd number, y and z are integers, $m \geq 3$, $1 \leq y \leq m/2$ and $1 \leq z \leq (m-1)/2$.

6. The conversion circuit according to claim 5, wherein the other end of the 2z-th resonant unit of the (m-1) resonant units is connectable to one of:

the first end (A2) of the load;
and
the second end (A3) of the load;
or wherein the other end of the 2z-th resonant unit of the (m-1) resonant units is connected to the second midpoint (A1).

7. The conversion circuit according to claim 3, wherein each of the (m-1) capacitors is further connected in series to a fourth winding (N4), and the fourth winding (N4), the first winding (N2) and the second winding (N3) are coupled to one another.

8. The conversion circuit according to claim 5, wherein the 2z-th resonant unit of the (m-1) resonant units is further connected in series to a fifth winding (N4), and the fifth winding (N4), the first winding (N2) and the second winding (N3) are coupled to one another.

9. The conversion circuit according to claim 1, wherein,

the first switching circuit further comprises a third switch (Q3) and a fourth switch (Q4) connected in series to the first switch (Q1) and the second switch (Q2), the second switch and the third switch being connected to form a second connection node (n2), and the third switch and the fourth switch being connected to form a third connection node (n3),
the conversion circuit further comprises:

a first energy storage unit comprising an energy storage element (Cb), and having one end connected to the second connection node, and the other end connected to the second rectifying branch; and
a second resonant unit electrically coupled between the second connection node (n2) and the first midpoint.

10. The conversion circuit according to claim 9, further comprising a common inductor (Lrx) via which the first resonant unit and the second resonant unit are connected to the first midpoint.

11. The conversion circuit according to claim 9, wherein the first resonant unit and the second resonant unit share a resonant inductor (Lrx).

12. The conversion circuit according to any one of claims 9-11, further comprising a third winding (N1), wherein the first resonant unit is connected in series to the third winding and electrically coupled between the first connection node (n1) and the first midpoint(B), the second resonant unit is connected in series to the third winding and electrically coupled between the second connection node (n2) and the first midpoint(B), and the third winding, the first winding and the second winding are coupled to one another.

13. The conversion circuit according to claim 1, wherein,

the first switching circuit further comprises a third switch (Q3) and a fourth switch (Q4) connected in series to the first switch (Q1) and the second switch (Q2), the second switch and the third switch being connected to form a second connection node (n2), and the third switch and the fourth switch being connected to form a third connection node (n3),
the conversion circuit further comprises:

a first energy storage unit comprising an energy storage element (Cb), and having one end connected to the second connection node, and the other end connected to the second rectifying branch; and
a second resonant unit electrically coupled between the third connection node (n3) and the first midpoint(B).

**14.** The conversion circuit according to claim 13, further comprising:

a third winding (N1$_1$) electrically connected in series to the first resonant unit and coupled between the first connection node and the first midpoint; and
a sixth winding (N1$_2$) electrically connected in series to the second resonant unit and coupled between the third connection node and the first midpoint;
wherein the sixth winding (N1$_2$), the third winding (N1$_1$), the first winding (S1) and the second winding (S2) are coupled to one another.

**15.** The conversion circuit according to claim 9 or 13, wherein the first resonant unit and the second resonant unit have the same resonant frequency.

**16.** The conversion circuit according to claim 1, further comprising a second switching circuit (132') and a third resonant unit (133'), wherein,

the second switching circuit is connected in parallel to the first switching circuit (132), and comprises a fifth switch (Q3) and a sixth switch (Q4) connected in series to form a fourth connection node,
the third resonant unit electrically coupled between the fourth connection node and the second midpoint(A1).

**17.** The conversion circuit according to claim 16, further comprising:

a third winding (N1$_1$) electrically connected in series to the first resonant unit and coupled between the first connection node and the first midpoint; and
a seventh winding (N1$_2$) electrically connected in series to the third resonant unit and coupled between the fourth connection node and the second midpoint.


**Patentansprüche**

**1.** Wandlerschaltung (20), die so konfiguriert ist, dass sie eine Spannung (Vin) einer Stromversorgung umwandelt und eine Last mit der umgewandelten Spannung versorgt, wobei die Stromversorgung und die Last jeweils ein erstes Ende und ein zweites Ende umfassen und das zweite Ende der Stromversorgung mit dem zweiten Ende der Last verbunden ist, wobei die Umwandlungsschaltung umfasst:

eine Vollwellen-Gleichrichterschaltung (21), die parallel zu der Last geschaltet ist und einen ersten Gleichrichterzweig und einen zweiten Gleichrichterzweig aufweist, die parallel geschaltet sind, wobei der erste Gleichrichterzweig einen ersten Gleichrichterschalter (QR1) und eine erste Wicklung (N2) aufweist, die in Reihe geschaltet sind, wobei der erste Gleichrichterschalter und die erste Wicklung verbunden sind, um einen ersten Mittelpunkt (B) zu bilden, der zweite Gleichrichterzweig einen zweiten Gleichrichterschalter (QR2) und eine zweite Wicklung (N3) aufweist, die in Reihe geschaltet sind, wobei der zweite Gleichrichterschalter und die zweite Wicklung verbunden sind, um einen zweiten Mittelpunkt (A1) zu bilden, wobei die erste Wicklung (N2) und die zweite Wicklung (N3) miteinander gekoppelt sind;
einen ersten Schaltkreis (22), der zwischen das erste Ende der Stromversorgung und das erste Ende der Last geschaltet werden kann und einen ersten Schalter (Q1) und einen zweiten Schalter (Q2) umfasst, die in Reihe geschaltet sind, um einen ersten Verbindungsknoten (n1) zu bilden; und
eine erste Resonanzeinheit (23), die zwischen dem ersten Verbindungsknoten und dem ersten Mittelpunkt gekoppelt ist;
**dadurch gekennzeichnet, dass** der erste Schaltkreis (22) über die zweite Wicklung (N3) mit dem zweiten Mittelpunkt (A1) verbunden ist.

**2.** Wandlerschaltung nach Anspruch 1, ferner umfassend:
eine dritte Wicklung (N1), die mit der ersten Resonanzeinheit (23) in Reihe geschaltet und zwischen dem ersten Verbindungsknoten und dem ersten Mittelpunkt elektrisch gekoppelt ist, wobei die dritte Wicklung (N1), die erste Wicklung (N2) und die zweite Wicklung (N3) miteinander gekoppelt sind.

**3.** Wandlerschaltung nach Anspruch 1, bei der

der erste Schaltkreis ferner (2m-2) Schalter umfasst, die mit dem ersten Schalter und dem zweiten Schalter in Reihe geschaltet sind, so dass der erste Schaltkreis 2m Schalter (Q1, Q2, ..., $Q_{2m}$) umfasst, die in Reihe geschaltet sind, wobei benachbarte Schalter der 2m Schalter verbunden sind, um Verbindungsknoten (n1, n2, ..., $n_{2m-1}$) zu bilden,
die Umwandlungsschaltung

(m-1)-Resonanzeinheiten ($34_1$, ..., $34_{m-1}$), wobei die (m-1)-Resonanzeinheiten und die ersten Resonanzeinheiten m Resonanzeinheiten bilden, wobei die x-te Resonanzeinheit der m Resonanzeinheiten mit der dritten Wicklung in Reihe geschaltet ist und zwischen dem Verbindungsknoten des (2x-1)-ten Schalters und dem 2x-ten Schalter der 2m Schalter und dem ersten Mittelpunkt elektrisch gekoppelt ist; und
(m-1) Energiespeichereinheiten, die jeweils ein Energiespeicherelement umfassen, wobei die k-te Energiespeichereinheit der (m-1) Energiespeichereinheiten mit einem Ende an einen Verbindungsknoten des 2k-ten Schalters und des (2k+1)-ten Schalters der 2m Schalter und mit dem anderen Ende an den zweiten Gleichrichterzweig angeschlossen ist, umfasst, wobei

m, x und k sind ganze Zahlen, m≥2, 1≤x≤m und 1≤k≤(m-1).

4. Wandlerschaltung nach Anspruch 3, bei der das andere Ende jeder der (m-1)-Energiespeichereinheiten mit einem der folgenden Elemente verbunden werden kann:

das erste Ende (A2) der Last; und
das zweite Ende (A3) der Ladung;
oder wobei das andere Ende jeder der (m-1) Energiespeichereinheiten mit dem zweiten Mittelpunkt (A1) verbunden ist.

5. Wandlerschaltung nach Anspruch 1, bei der

der erste Schaltkreis ferner (m-2) Schalter umfasst, die in Reihe mit dem ersten Schalter und dem zweiten Schalter verbunden sind, so dass der erste Schaltkreis m Schalter (Q1, Q2, ..., $Q_m$) umfasst, die in Reihe geschaltet sind, wobei benachbarte Schalter der m Schalter verbunden sind, um Verbindungsknoten zu bilden,
die Wandlerschaltung ferner (m-2) Resonanzeinheiten ($54_1$, $54_2$, ..., $54_{m-2}$) umfasst, wobei die (m-2) Resonanzeinheiten und die erste Resonanzeinheit (53) (m-1) Resonanzeinheiten bilden,
die (2y-1)-te Resonanzeinheit der (m-1)-Resonanzeinheiten mit der dritten Wicklung (N1) in Reihe geschaltet ist und zwischen dem Verbindungsknoten des (2y-1)-ten Schalters und dem 2y-ten Schalter der m Schalter und dem ersten Mittelpunkt elektrisch gekoppelt ist,
die 2z-te Resonanzeinheit der (m-1)-Resonanzeinheiten mit einem Ende an den Verbindungsknoten zwischen dem 2z-ten Schalter und dem (2z+1)-ten Schalter der m Schalter und mit dem anderen Ende an den zweiten Gleichrichterzweig angeschlossen ist, und
m ist eine ungerade Zahl, y und z sind ganze Zahlen, m≥3, 1≤y≤m/2 und 1≤z≤(m-1)/2.

6. Wandlerschaltung nach Anspruch 5, bei der das andere Ende der 2z-ten Resonanzeinheit der (m-1)-Resonanzeinheiten mit einem der folgenden Elemente verbindbar ist:

das erste Ende (A2) der Last; und
das zweite Ende (A3) der Ladung;
oder wobei das andere Ende der 2z-ten Resonanzeinheit der (m-1) Resonanzeinheiten mit dem zweiten Mittelpunkt (A1) verbunden ist.

7. Wandlerschaltung nach Anspruch 3, bei der jeder der (m-1)-Kondensatoren ferner in Reihe mit einer vierten Wicklung (N4) verbunden ist und die vierte Wicklung (N4), die erste Wicklung (N2) und die zweite Wicklung (N3) miteinander gekoppelt sind.

8. Wandlerschaltung nach Anspruch 5, bei der die 2z-te Resonanzeinheit der (m-1)-Resonanzeinheiten ferner mit einer fünften Wicklung (N4) in Reihe geschaltet ist, und die fti nfte Wicklung (N4), die erste Wicklung (N2) und die zweite Wicklung (N3) miteinander gekoppelt sind.

9. Wandlerschaltung nach Anspruch 1, bei der

der erste Schaltkreis ferner einen dritten Schalter (Q3) und einen vierten Schalter (Q4) umfasst, die in Reihe mit dem ersten Schalter (Q1) und dem zweiten Schalter (Q2) verbunden sind, wobei der zweite Schalter und der dritte Schalter verbunden sind, um einen zweiten Verbindungsknoten (n2) zu bilden, und der dritte Schalter und der vierte Schalter verbunden sind, um einen dritten Verbindungsknoten (n3) zu bilden, die Wandlerschaltung

eine erste Energiespeichereinheit, die ein Energiespeicherelement (Cb) umfasst und deren eines Ende mit dem zweiten Verbindungsknoten und deren anderes Ende mit dem zweiten Gleichrichterzweig verbunden ist; und
eine zweite Resonanzeinheit, die elektrisch zwischen dem zweiten Verbindungsknoten (n2) und dem ersten Mittelpunkt gekoppelt ist,

umfasst.

10. Wandlerschaltung nach Anspruch 9, mit ferner einer gemeinsamen Induktivität (Lrx), über die die erste Resonanzeinheit und die zweite Resonanzeinheit mit dem ersten Mittelpunkt verbunden sind.

11. Wandlerschaltung nach Anspruch 9, bei der die erste Resonanzeinheit und die zweite Resonanzeinheit eine gemeinsame Resonanzinduktivität (Lrx) aufweisen.

12. Wandlerschaltung nach einem der Ansprüche 9 bis 11, die ferner eine dritte Wicklung (N1) umfasst, wobei die erste Resonanzeinheit in Reihe mit der dritten Wicklung geschaltet und zwischen dem ersten Verbindungsknoten (n1) und dem ersten Mittelpunkt (B) elektrisch gekoppelt ist, die zweite Resonanzeinheit in Reihe mit der dritten Wicklung geschaltet und zwischen dem zweiten Verbindungsknoten (n2) und dem ersten Mittelpunkt (B) elektrisch gekoppelt ist, und die dritte Wicklung, die erste Wicklung und die zweite Wicklung miteinander gekoppelt sind.

13. Wandlerschaltung nach Anspruch 1, bei der

der erste Schaltkreis ferner einen dritten Schalter (Q3) und einen vierten Schalter (Q4) umfasst, die in Reihe mit dem ersten Schalter (Q1) und dem zweiten Schalter (Q2) verbunden sind, wobei der zweite Schalter und der dritte Schalter verbunden sind, um einen zweiten Verbindungsknoten (n2) zu bilden, und der dritte Schalter und der vierte Schalter verbunden sind, um einen dritten Verbindungsknoten (n3) zu bilden, die Wandlerschaltung

eine erste Energiespeichereinheit, die ein Energiespeicherelement (Cb) umfasst und deren eines Ende mit dem zweiten Verbindungsknoten und deren anderes Ende mit dem zweiten Gleichrichterzweig verbunden ist; und
eine zweite Resonanzeinheit, die elektrisch zwischen dem dritten Verbindungsknoten (n3) und dem ersten Mittelpunkt (B) gekoppelt ist,

umfasst.

14. Wandlerschaltung nach Anspruch 13, umfassend:

eine dritte Wicklung (N1$_1$), die mit der ersten Resonanzeinheit elektrisch in Reihe geschaltet und zwischen dem ersten Verbindungsknoten und dem ersten Mittelpunkt gekoppelt ist; und
eine sechste Wicklung (N1$_2$), die elektrisch mit der zweiten Resonanzeinheit in Reihe geschaltet ist und zwischen dem dritten Verbindungsknoten und dem ersten Mittelpunkt liegt;
wobei die sechste Wicklung (N1$_2$), die dritte Wicklung (N1$_1$), die erste Wicklung (S1) und die zweite Wicklung (S2) miteinander gekoppelt sind.

15. Wandlerschaltung nach Anspruch 9 oder 13, bei der die erste Resonanzeinheit und die zweite Resonanzeinheit die gleiche Resonanzfrequenz haben.

16. Wandlerschaltung nach Anspruch 1, die ferner einen zweiten Schaltkreis (132') und eine dritte Resonanzeinheit (133') umfasst, wobei,

der zweite Schaltkreis ist parallel zu dem ersten Schaltkreis (132) geschaltet und umfasst einen fünften Schalter (Q3) und einen sechsten Schalter (Q4), die in Reihe geschaltet sind, um einen vierten Verbindungsknoten zu bilden,
die dritte Resonanzeinheit ist elektrisch zwischen dem vierten Verbindungsknoten und dem zweiten Mittelpunkt (A1) gekoppelt.

**17.** Wandlerschaltung nach Anspruch 16, ferner umfassend:

eine dritte Wicklung ($N1_1$), die mit der ersten Resonanzeinheit elektrisch in Reihe geschaltet und zwischen dem ersten Verbindungsknoten und dem ersten Mittelpunkt gekoppelt ist; und
eine siebte Wicklung ($N1_2$), die elektrisch mit der dritten Resonanzeinheit in Reihe geschaltet ist und zwischen dem vierten Verbindungsknoten und dem zweiten Mittelpunkt liegt.

**Revendications**

**1.** Circuit de conversion (20) configuré pour convertir une tension (Vin) d'une alimentation électrique et alimenter une charge par la tension convertie, l'alimentation électrique et la charge comprenant chacune une première extrémité et une deuxième extrémité, et la deuxième extrémité de l'alimentation électrique étant connectée à la deuxième extrémité de la charge, le circuit de conversion comprenant

un circuit redresseur pleine onde (21) connecté en parallèle à la charge ayant une première branche de redressement et une deuxième branche de redressement connectées en parallèle, la première branche de redressement ayant un premier commutateur de redressement (QR1) et un premier enroulement (N2) connectés en série, le premier commutateur de redressement et le premier enroulement étant connectés pour former un premier point médian (B), la deuxième branche de redressement ayant un deuxième commutateur de redressement (QR2) et un deuxième enroulement (N3) connectés en série, le deuxième commutateur de redressement et le deuxième enroulement étant connectés pour former un deuxième point médian (A1), dans lequel le premier enroulement (N2) et le deuxième enroulement (N3) sont couplés l'un à l'autre ;
un premier circuit de commutation (22) pouvant être connecté entre la première extrémité de l'alimentation électrique et la première extrémité de la charge, et comprenant un premier commutateur (Q1) et un deuxième commutateur (Q2) connectés en série pour former un premier noeud de connexion (n1) ; et
une première unité résonante (23) couplée entre le premier noeud de connexion et le premier point médian ; **caractérisé en ce que** le premier circuit de commutation (22) est connecté au deuxième point médian (A1) par l'intermédiaire du deuxième enroulement (N3).

**2.** Circuit de conversion selon la revendication 1, comprenant en outre :
un troisième enroulement (N1) connecté à la première unité résonante (23) en série et couplé électriquement entre le premier noeud de connexion et le premier point médian, dans lequel le troisième enroulement (N1), le premier enroulement (N2) et le deuxième enroulement (N3) sont couplés les uns aux autres.

**3.** Circuit de conversion selon la revendication 1, dans lequel :

le premier circuit de commutation comprend en outre (2m-2) commutateurs connectés en série au premier commutateur et au deuxième commutateur, de sorte que le premier circuit de commutation comprend 2m commutateurs (Q1, Q2, ..., $Q_{2m}$) connectés en série, dans lequel des commutateurs adjacents des 2m commutateurs sont connectés pour former des noeuds de connexion (n1, n2, ..., $n_{2m-1}$),
le circuit de conversion comprend en outre :

(m-1) unités résonantes ($34_1$, ...,$34_{m-1}$), les (m-1) unités résonantes et les premières unités résonantes formant m unités résonantes, la x-ième unité résonante des m unités résonantes étant connectée en série au troisième enroulement et étant couplée électriquement entre le noeud de connexion du (2x-1)ième commutateur et le 2x-ième commutateur des 2m commutateurs et le premier point médian ; et
(m-1) unités de stockage d'énergie comprenant chacune un élément de stockage d'énergie, la k-ième unité de stockage d'énergie des (m-1) unités de stockage d'énergie ayant une extrémité connectée à un noeud de connexion du 2k-ième commutateur et du (2k+1)ième commutateur des 2m commutateurs, et l'autre extrémité connectée à la deuxième branche de redressement, où
m, x et k sont des nombres entiers, $m \geq 2$, $1 \leq x \leq m$ et $1 \leq k \leq (m-1)$.

**4.** Circuit de conversion selon la revendication 3, dans lequel l'autre extrémité de chacune des (m-1) unités de stockage d'énergie peut être connectée à l'une parmi :

la première extrémité (A2) de la charge ; et
la deuxième extrémité (A3) de la charge ;
ou dans lequel l'autre extrémité de chacune des (m-1) unités de stockage d'énergie est connectée au deuxième point médian (A1).

**5.** Circuit de conversion selon la revendication 1, dans lequel,

le premier circuit de commutation comprend en outre (m-2) commutateurs connectés en série au premier commutateur et au deuxième commutateur, de sorte que le premier circuit de commutation comprend m commutateurs (Q1, Q2, ..., $Q_m$) connectés en série, dans lequel des commutateurs adjacents des m commutateurs sont connectés pour former des noeuds de connexion,
le circuit de conversion comprend en outre (m-2) unités résonantes ($54_1$, $54_2$, ..., $54_{m-2}$), les (m-2) unités résonantes et la première unité résonante (53) formant (m-1) unités résonantes,
la (2y-1)ième unité résonante des (m-1) unités résonantes est connectée en série au troisième enroulement (N1) et couplée électriquement entre le noeud de connexion du (2y-1)ième commutateur et le 2y-ième commutateur des m commutateurs et le premier point médian,
la 2z-ième unité résonante des (m-1) unités résonantes a une extrémité connectée au noeud de connexion entre le 2z-ième commutateur et le (2z+1)ième commutateur des m commutateurs, et l'autre extrémité connectée à la deuxième branche de redressement, et
m est un nombre impair, y et z sont des nombres entiers, $m \geq 3$, $1 \leq y \leq m/2$ et $1 \leq z \leq (m-1)/2$.

**6.** Circuit de conversion selon la revendication 5, dans lequel l'autre extrémité de la 2z-ième unité résonante des (m-1) unités résonantes peut être connectée à l'une parmi :

la première extrémité (A2) de la charge ; et
la deuxième extrémité (A3) de la charge ;
ou dans lequel l'autre extrémité de de la 2z-ième unité résonante des (m-1) unités résonantes est connectée au deuxième point médian (A1).

**7.** Circuit de conversion selon la revendication 3, dans lequel chacun des (m-1) condensateurs est en outre connecté en série à un quatrième enroulement (N4), et le quatrième enroulement (N4), le premier enroulement (N2) et le deuxième enroulement (N3) sont couplés les uns aux autres.

**8.** Circuit de conversion selon la revendication 5, dans lequel la 2z-ième unité résonante des (m-1) unités résonantes est en outre connectée en série à un cinquième enroulement (N4), et le cinquième enroulement (N4), le premier enroulement (N2) et le deuxième enroulement (N3) sont couplés les uns aux autres.

**9.** Circuit de conversion selon la revendication 1, dans lequel,

le premier circuit de commutation comprend en outre un troisième commutateur (Q3) et un quatrième commutateur (Q4) connectés en série au premier commutateur (Q1) et au deuxième commutateur (Q2), le deuxième commutateur et le troisième commutateur étant connectés pour former un deuxième noeud de connexion (n2), et le troisième commutateur et le quatrième commutateur étant connectés pour former un troisième noeud de connexion (n3),
le circuit de conversion comprend en outre :

une première unité de stockage d'énergie comprenant un élément de stockage d'énergie (Cb), et ayant une extrémité connectée au deuxième noeud de connexion, et l'autre extrémité connectée à la deuxième branche de redressement ; et
une deuxième unité résonante couplée électriquement entre le deuxième noeud de connexion (n2) et le premier point médian.

**10.** Circuit de conversion selon la revendication 9, comprenant en outre un inducteur commun (Lrx) par lequel la première unité résonante et la deuxième unité résonante sont connectées au premier point médian.

**11.** Circuit de conversion selon la revendication 9, dans lequel la première unité résonante et la deuxième unité résonante partagent un inducteur résonant (Lrx).

**12.** Circuit de conversion selon l'une quelconque des revendications 9 à 11, comprenant en outre un troisième enroulement (N1), dans lequel la première unité résonante est connectée en série au troisième enroulement et couplée électriquement entre le premier noeud de connexion (n1) et le premier point médian (B), la deuxième unité résonante est connectée en série au troisième enroulement et couplée électriquement entre le deuxième noeud de connexion (n2) et le premier point médian (B), et le troisième enroulement, le premier enroulement et le deuxième enroulement sont couplés les uns aux autres.

**13.** Circuit de conversion selon la revendication 1, dans lequel,

le premier circuit de commutation comprend en outre un troisième commutateur (Q3) et un quatrième commutateur (Q4) connectés en série au premier commutateur (Q1) et au deuxième commutateur (Q2), le deuxième commutateur et le troisième commutateur étant connectés pour former un deuxième noeud de connexion (n2), et le troisième commutateur et le quatrième commutateur étant connectés pour former un troisième noeud de connexion (n3),
le circuit de conversion comprend en outre :

une première unité de stockage d'énergie comprenant un élément de stockage d'énergie (Cb), et ayant une extrémité connectée au deuxième noeud de connexion, et l'autre extrémité connectée à la deuxième branche de redressement ; et
une deuxième unité résonante couplée électriquement entre le troisième noeud de connexion (n3) et le premier point médian (B).

**14.** Circuit de conversion selon la revendication 13, comprenant en outre :

un troisième enroulement ($N1_1$) connecté électriquement en série à la première unité résonante et couplé entre le premier noeud de connexion et le premier point médian ; et
un sixième enroulement ($N1_2$) connecté électriquement en série à la deuxième unité résonante et couplé entre le troisième noeud de connexion et le premier point médian ;
dans lequel le sixième enroulement ($N1_2$), le troisième enroulement ($N1_1$), le premier enroulement (S1) et le deuxième enroulement (S2) sont couplés les uns aux autres.

**15.** Circuit de conversion selon la revendication 9 ou 13, dans lequel la première unité résonante et la deuxième unité résonante ont la même fréquence de résonance.

**16.** Circuit de conversion selon la revendication 1, comprenant en outre un deuxième circuit de commutation (132') et une troisième unité résonante (133'), dans lequel,

le deuxième circuit de commutation est connecté en parallèle au premier circuit de commutation (132) et comprend un cinquième commutateur (Q3) et un sixième commutateur (Q4) connectés en série pour former un quatrième noeud de connexion,
une troisième unité résonante couplée électriquement entre le quatrième noeud de connexion et le deuxième point médian (A1).

**17.** Circuit de conversion selon la revendication 16, comprenant en outre :

un troisième enroulement ($N1_1$) connecté électriquement en série à la première unité résonante et couplé entre le premier noeud de connexion et le premier point médian ; et
un septième enroulement ($N1_2$) connecté électriquement en série à la troisième unité résonante et couplé entre le quatrième noeud de connexion et le deuxième point médian.

FIG. 1

FIG. 2A

FIG. 2B

21

FIG. 2C

FIG. 2D

FIG. 3

FIG. 4

FIG. 5

FIG. 6

FIG. 7

FIG. 8

FIG. 9

F I G. 10

F I G. 11

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019229613 A1

**Non-patent literature cited in the description**

- Non-isolated 48V-to-1V Heterogeneous Integrated Voltage Converters for High Performance Computing in Data Centers. **GONG MINXIANG et al.** 2020 IEEE 63RD INTERNATIONAL MIDWEST SYMPOSIUM ON CIRCUITS AND SYSTEMS (MWSCAS). IEEE